Europäisches Patentamt

European Patent Office

Office européen des brevets

(11) Publication number: **0 106 498**
**B1**

# EUROPEAN PATENT SPECIFICATION

(45) Date of publication of patent specification: 02.08.89

(51) Int. Cl.⁴: **G 06 F 13/12,** G 06 F 13/24

(21) Application number: 83305219.4

(22) Date of filing: 07.09.83

(54) Input/output interrupt system.

(30) Priority: 13.09.82 JP 159103/82

(43) Date of publication of application:
25.04.84 Bulletin 84/17

(45) Publication of the grant of the patent:
02.08.89 Bulletin 89/31

(84) Designated Contracting States:
DE FR GB

(56) References cited:
US-A-4 207 609

IBM TECHNICAL DISCLOSURE BULLETIN, vol.
19, no. 4, September 1976, pages 1320-1321,
New York, US; D. CHU: "Varying attention
interrupt delay"

(73) Proprietor: FUJITSU LIMITED
1015, Kamikodanaka Nakahara-ku
Kawasaki-shi Kanagawa 211 (JP)

(72) Inventor: Matsubara, Yoshiaki
35-6-201, Kitashinjuku 3-chome
Shinjuku-ku Tokyo 160 (JP)
Inventor: Tsuru, Masato
1-6-308 Konandai 6-chome, Konan-ku
Yokohama-shi Kanagawa 233 (JP)

(74) Representative: Skone James, Robert Edmund
et al
GILL JENNINGS & EVERY 53-64 Chancery Lane
London WC2A 1HN (GB)

## Description

This invention relates to a data processing system, and especially to an input/output interrupt system in a channel processing circuit situated between an input/ output device and a central processing unit for feeding an input/output interrupt from the input/output device to the central processing unit.

In a conventional data processing system, an input/output device is formed so as to transmit data via a plurality of paths, i.e. channel circuits. However, in such a system, preparation for the transmission of data via an alternative path is usually effected by running a control program prepared in the central processing unit. Therefore, a constant time is required for that operation.

Due to recent developments in electronic equipment, the processing speed of central processing units, channel circuits, etc. is being increased more and more, enabling the electronic equipment to be operated more rapidly than previous equipments. Therefore, the time which is required for input/output interrupt, the time which the central processing unit requires for preparation for the transmission of data via an alternative path, and the time which the channel circuit requires for activation of the input/output device via an alternative path, etc. is decreased as compared with previous equipments.

Therefore, in the aforementioned data processing system, preparation for the transmission of data from the central processing unit via an alternative path is effected during internal initialization of the input/output device, after activation via the channel circuit, i.e. after the connection between the input/output device and the channel circuit is broken, following an input/output interrupt due to the busy state of the input/output device.

When the input/output device is initializing, the busy state thereof is reported to the central processing unit. Therefore, the alternative path assumes the same state as the primary path and the phenomenon of hang-up therefore temporarily occurs, or the efficiency is decreased.

An object of the present invention is to overcome this problem, which hinders the transmission of data via an alternative path.

According to the invention a data processing system comprising a central processing unit, a plurality of channel circuits, and an input/output device which requires an input/output interrupt, each channel circuit responding to a request for input/output interrupt, propagating the request to the central processing unit, and reporting the state of the input/output device to the central processing unit is characterised by a channel processing device for selecting one of the plurality of channel circuits, the channel processing device comprising interrupt detecting means, connected to the input/output device for detecting the input/output interrupt sent from the input/output device to the channel processing device, status information detecting means, connected to the input/output device for detecting whether status information, sent from the input/output device to the central processing unit together with the input/output interrupt is a predetermined specified value indicating that the input/output device is initialising; and counting means connected to the status information detecting means for counting for a predetermined constant time when the status information detecting means detects the predetermined specified value, the status information detecting means inputting the input/output interrupt to the central processing unit after the counting means counts for the predetermined constant time.

An embodiment of the invention will now be described by way of example, with reference to the accompanying drawings in which

Figure 1 is a schematic block diagram showing the construction of a conventional data processing system including input/output interrupt,

Figure 2 is a schematic block diagram of a data processing system including an input/output interrupt system according to the present invention,

Figure 3 is a detailed block diagram of a channel processing circuit of the system of Fig. 2,

Figure 4 is a timing chart showing the operation of the channel processing device of Fig. 3,

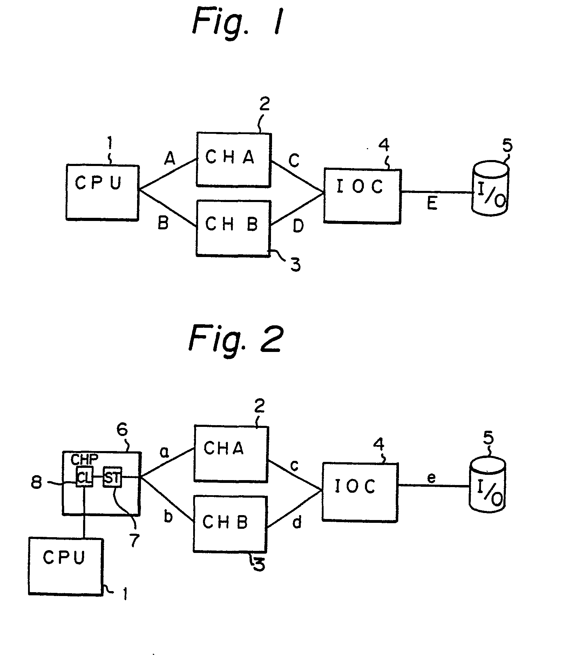

Figure 1 shows the outline of a conventional data processing system comprising a central processing unit 1, an A-channel circuit 2, a B-channel circuit 3, an input/ output control circuit 4, and an input/output device 5. In the conventional data processing system shown in Fig. 1, the input/ output device 5 is formed so as to transmit data via a plurality of paths, i.e. the plurality of channel circuits 2 and 3. In such a data processing system, an input/output command is activated via one path. If a path is in a busy state, the input/output command is activated via another path, i.e. the command is activated via an alternative path. Hence, in Fig. 1 let us assume that the central processing unit 1 is activated by an input/output start command transmitted to the input/output device 5 via the input/output control circuit 4 and the channel circuit 2. In this case, if the input/ output device 5 cannot be activated, the device 5 reports its busy state to the channel circuit 2 via paths E and C, and the channel circuit 2 feeds an input/output interrupt request to the central processing unit 1. The request is accepted, the interrupt is completed in the central processing unit 1, and the connection between the channel circuit 2 and the input/output control circuit 4 is broken.

If the path A-C-E is in a busy state, the central processing unit 1 prepares for transmission of the input/output start command via an alternative path B-D-E and activates that path. Thus, the data processing system can be operated without the efficiency thereof being decreased.

However, preparation for the transmission of data via an alternative path is usually effected by running a control program prepared in the central processing unit. Therefore, a constant time is required for the operation.

On the other hand, if the input/output device 5 is the type which requires initialization of its internal state, the above-mentioned constant time is taken into account and the connection of the device 5 to the channel circuit 2 or 3 is broken before initialization of the input/output device 5 is completed. Thereafter, input/output interrupt from the channel is executed and the central processing unit 1 prepares for the transmission of data via the alternative path. Thus, when the transmission of data is effected via the alternative path, the other channel circuit 3 or 2 is connected to the input/output. device 5.

Since, as was mentioned above, the processing speed of the central processing unit, channel circuits, etc. has been increased more and more, present electronic equipment can be operated more rapidly than can conventional equipment. Therefore, the time which is required for input/ output interrupt, the time which the central processing unit 1 requires for the preparation of the transmission of data via an alternative path, and the time which the channel circuit 2 or 3 requires for activation of the input/output device 5 via an alternative path, etc is reduced as compared with previous equipment.

Therefore, in the aforementioned data processing system, the transmission of data from the central processing unit 1 via an alternative path is carried out when the input/output device 5 undergoes internal initialization after activation via the channel circuit 2, i.e. after the connection of the channel circuit 2 to the input/output device 5 is broken following an input/output interrupt due to the busy state of the input/output device 5.

However, the input/output device 5 is initializing, so the busy state thereof is reported to the central processing unit. Therefore, the alternative path B-D-E assumes the same state as the primary path A-C-E, and thereby the problem of a hang-up phenomenon temporarily occurs or the efficiency is decreased.

Figure 2 is a diagram of an embodiment of the present invention. In Figure 2, parts common to Figure 1 are denoted by the same reference numerals and symbols as in Fig. 1. In Fig. 2, the system further comprises a channel processing circuit (CHP) 6 including a detector 7 for detecting status information, and a counting circuit 8. The channel processing circuit 6 is situated between the central processing unit 1 and the channel circuits 2 and 3 and controls communication between each channel circuit and the central processing unit.

The above-mentioned status of the input/output interrupt in the input/output device 5, which is of the type which requires a constant time for the internal initialization thereof as mentioned above, can be detected by the detector 7. If such status information is detected, the counting circuit 8 is driven so that the transmission of an input/output interrupt (an interrupt which shows that the primary path is busy) from the channel circuit 2 to the central processing unit 1 is delayed for a constant time. Accordingly, the timing of activation via an alternative path b-d-e from the central processing unit 1 is also delayed for the above-mentioned constant time so that the problem of the input/ output device 5 being in the initializing process when activation is effected via an alternative path is solved.

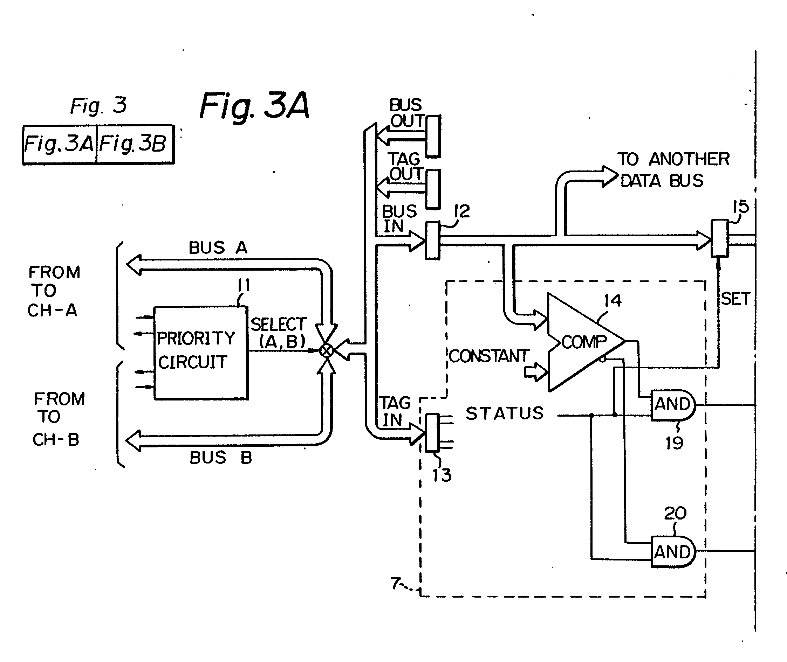

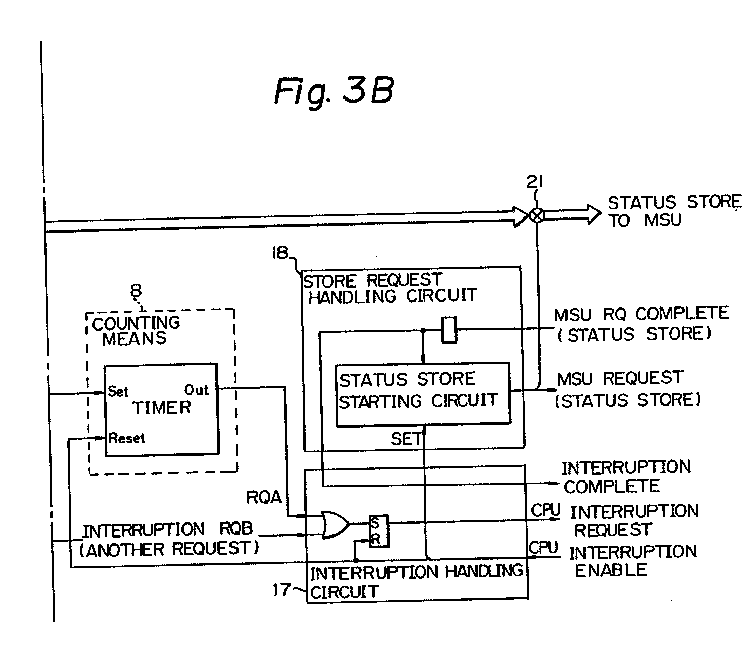

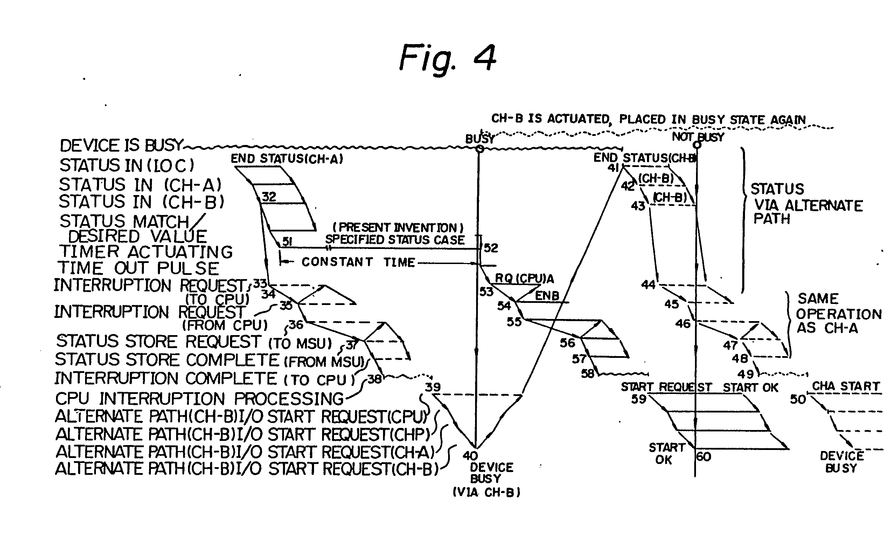

The channel processing circuit 6 will now be described with reference to Fig. 3 and Fig. 4. A priority select circuit 11 selects one of a plurality of channels CH-A, CH-B,... by using time division and a priority control process, and connects the selected channel to the channel processing circuit 6. When a channel is selected, the operation of that channel is controlled by the priority select circuit 11. For example, when the channel CH-A is selected, the content of a data bus (BUS-IN) is latched in a BUS-IN register 12. At the same time, the content of TAG-IN is also latched in a TAG-IN register 13 (see 32 in Fig. 4). The content of the BUS-IN register 12 is supplied to a comparator circuit 14 and is compared with a constant value. That is, the comparator circuit 14 checks whether the output of the BUS-IN register 12 is a constant value or not. In this state, when a STATUS signal is at a constant value, an AND gate 19 assumes an "ON" state.

When a STATUS signal is not at a constant value, a gate 20 assumes an "ON" state. In a conventional system, the gate 20 assumes an "ON" state. The operation thereof is shown by a broken line 33 (RQB) in Fig. 4. An interrupt request RQB is sent via an interruption handling circuit 17 to the central processing unit 1 and awaits an interrupt enable signal ENABLE (34 in Fig. 4). When the interrupt enable signal is received (35 in Fig. 4), the interrupt request is reset, and, at the same time, a request for status store is generated by a store request handling) circuit 18 (36 in Fig. 4. The state of the BUS-IN register 12 is stored in a status register 15 when the TAG-IN register 13 is in an "ON" state. When the store request is issued, a gate 21 assumes an "ON" state and the state of the BUS-IN register 12 is transferred to MSU. When the status store is completed, store-complete information is sent to the store request handling circuit 18 (37 in Fig. 4), and the interruption handling circuit 17 reports the completion of interrupt to the central processing unit 1. Thereafter, the interrupt process is carried out (38 in Fig. 4) and the device is driven by an alternative path so as to use the resources effectively (39 in Fig. 4).

In a conventional system, as is shown by a broken line 39 in Fig. 4, when the comparator circuit 14 has the status of a constant value, the circuit 14 remains in a busy state until the STATUS signal is reported. In this state, the system is driven by an alternative path (CH-B), and if the operation is transmitted to the input/ output control unit, the input/output control unit transmits a BUSY signal (40 in Fig. 4). Thereafter, the central processing unit 1 recognises the busy state of the input/ output control unit, and when the BUSY signal from the alternative path (CH-B) is discontinued (41 in Fig. 4), the central processing unit attempts to report the end status (END). At this time, the busy state of the device, which has already been activated by the channel CH-B, is maintained. Thereafter, the channels CH-A and CH-B are alternately opened and the state thereof is reported, respectively, and a deadlock loop is formed in the software (42 to 50 in Fig. 4).

In the present invention, the reason for the specified interrupt is detected by the comparator circuit 14 and the gate 19, the gate 20 is opened, and the gate 19 is closed so that the counting circuit 8 is driven (51 in Fig. 4). After the counting circuit 8 counts a constant time (52 in Fig. 4), it outputs a time output RQA signal to the interruption handling circuit 17. The circuit 17 feeds an interrupt request (53 in Fig. 4), similar to an RQB signal (conventional device), to the central processing unit 1. When the interrupt enable signal is received (54 in Fig. 4), the counting circuit 8 is reset, so that a subsequent counting operation becomes possible. That is, the counting operation is carried out in a manner similar to that of the conventional system. In Fig. 4, the operations 54 to 59 are similar to the operations 35 to 39.

In Fig. 4, the RAQ signal is denoted by a solid line, the interrupt operation being delayed for a constant time by the counting means shown in Fig. 3. Thereafter, the start command from the alternative path reaches the input/output control unit via the channel CH-B. At this time, the busy state of the device is discontinued (60 in Fig. 4). In this case, a busy signal is not formed in the channel CH-B, with the result that the input/output device is started.

As was explained in detail above, according to the present invention, after the counting circuit 8 counts the constant time, the input/output interrupt request is supplied from the channel processing circuit 6 to the central processing unit 1. Therefore, the input/output device 5 can be activated via one channel, and if the channel is busy, the device can be activated via another channel so that the phenomenon of hang-up in the software can be effectively avoided.

## Claims

1. A data processing system comprising a central processing unit (1), a plurality of channel circuits (2, 3), and an input/output device (5) which requires an input/output interrupt, each channel circuit responding to a request for input/output interrupt, propagating the request to the central processing unit, and reporting the state of the input/output device to the central processing unit; characterised by a channel processing device (6) for selecting one of the plurality of channel circuits (2, 3), the channel processing device comprising interrupt detecting means (20), connected to the input/output device, for detecting the input/output interrupt sent from the input/output device to the channel processing device, status information detecting means (7), connected to the input/output device for detecting whether status information, sent from the input/output device to the central processing unit together with the input/output interrupt, is a predetermined specified value indicating that the input/output device is initialising; and counting means (8) connected to the status information detecting means, for counting for a predetermined constant time when the status information detecting means detects the predetermined specified value, the status information detecting means inputting the input/output interrupt to the central processing unit after the counting means counts for the predetermined constant time.

2. A system according to claim 1, characterised in that the status information detecting means (7) comprises comparator means (14) which compares the content of the selected channel with a constant value; a tag register (13) which latches tag-in information; a first gate (19) which receives the output of the tag register and the output of the comparator means when the content of the selected channel is at said constant value and which supplies the output to the counting means (8); and a second gate (20) which receives the output of the tag register and the output of the comparator means when the content of the selected channel is not at said constant value and which supplies the interruption request.

## Patentansprüche

1. Datenverarbeitungssystem mit einer zentralen Prozessoreinheit (1), einer Vielzahl von Kanalschaltungen (2, 3) und einer Eingabe/Ausgabe-Einrichtung (5), welche eine Eingabe/Ausgabeunterbrechung erfordert, bei dem jede Kanalschaltung, die auf einer Anforderung für eine Eingabe/Ausgabe-Unterbrechung antwortet, die Anforderung an die zentrale Prozessoreinheit weitergibt, und über den Zustand der Eingabe/Ausgabe-Einrichtung an die zentrale Prozessoreinheit berichtet; gekennzeichnet durch eine Kanalprozessoreinrichtung (6), zum Auswählen einer von der Vielzahl der Kanalschaltungen (2, 3), welche Kanalprozessoreinrichtung Unterbrechungsdetektoreinrichtungen (20) umfaßt, die mit der Eingabe/Ausgabe-Einrichtung verbunden sind, um die Eingabe/Ausgabe-Unterbrechung zu detektieren, die von der Eingabe/ Ausgabe-Einrichtung an die Kanalprozessoreinrichtung gesendet wurde, und eine Statusinformationsdetektoreinrichtung (7), die mit der Eingabe/Ausgabe-Einrichtung verbunden ist, um zu detektieren, ob die Statusinformation, die von der Eingabe/Ausgabe-Einrichtung zusammen mit der Eingabe/Ausgabe-Unterbrechung zu der zentralen Pprozessoreinheit gesendet wurde, ein vorbestimmter spezifizierter Wert ist, der anzeigt, daß die Eingabe/Ausgabe-Einrichtung initialisiert; und eine Zähleinrichtung (8), die mit der Statusinformationsdetektoreinrichtung verbunden ist, um eine vorbestimmte konstante Zeit lang zu zählen, wenn die Statusinformationsdetektoreinrichtung den vorbestimmten spezifizierten Wert detektiert, wobei die Statusinformationsdetektoreinrichtung die Eingabe/Ausgabe-Unterbrechung in die zentrale Prozessoreinheit eingibt, nachdem die Zähleinrichtung eine vorbestimmte Zeit lang gezählt hat.

2. System nach Anspruch 1, dadurch gekennzeichnet, daß die Statusinformationsdetektoreinrichtung (7) eine Komparatoreinrichtung (14) umfaßt, die den Inhalt des ausgewählten Kanals mit einem konstanten Wert vergleicht; ein Kennzeichenregister (13), welches die Kennzeichenein-Information hält; ein erstes Gate (19), welches den Ausgang des Kennzeichenregisters und den Ausgang der Komparatoreinrichtung empfängt, wenn der Inhalt des ausgewählten Kanals bei dem genannten konstanten Wert ist, und welches den Ausgang an die Zähleinrichtung (8) liefert; und ein zweites Gate (20), welches den Ausgang des Kennzeichenregisters und den Ausgang der Komparatoreinrichtung empfängt, wenn der Inhalt des ausgewählten Kanals nicht bei dem genannten konstanten Wert ist, und welches die Unterbrechungsanforderung liefert.

**Revendications**

1. Système de traitement de données comportant une unité centrale de traitement (1), plusieurs circuits de canaux (2, 3) et un dispositif d'entrée/sortie (5) qui nécessite une interruption d'entrée/sortie, chaque circuit de canal répondant à une demande d'interruption d'entrée/sortie, propageant la demande vers l'unité centrale de traitement et indiquant l'état du dispositif d'entrée/sortie à l'unité centrale de traitement; caractérisé par un dispositif de traitement de canaux (6) pour sélectionner l'un de plusieurs circuits de canaux (2, 3), le dispositif de traitement de canaux comportant un dispositif de détection d'interruption (20) connecté au dispositif d'entrée/sortie pour détecter l'interruption d'entrée/sortie émise par le dispositif d'entrée/sortie vers le dispositif de traitement de canaux, un dispositif de détection d'informations d'état (7) connecté au dispositif d'entrée/sortie pour détecter si des informations d'état émises par le dispositif d'entrée/sortie vers l'unité centrale de traitement avec l'interruption d'entrée/sortie ont une valeur spécifiée et prédéterminée indiquant que le dispositif d'entrée/sortie est en cours d'initialisation; et un dispositif de comptage (8) connecté au dispositif de détection d'informations d'état pour compter un temps constant prédéterminé lorsque le dispositif de détection d'informations d'état détecte la valeur spécifiée et prédéterminée, le dispositif de détection d'informations d'état appliquant l'interruption d'entrée/sortie à l'unité centrale de traitement après que le dispositif de comptage a compté le temps constant prédéterminé.

2. Systéme selon la revendication 1, caractérisé en ce que le dispositif de détection d'informations d'état (7) comporte un dispositif comparateur (14) qui compare le contenu du canal sélectionné avec une valeur constante; un registre de marquage (13) qui verrouille des informations d'entrée de marquage; une première porte (19) qui reçoit la sortie du registre de marquage et la sortie du dispositif comparateur lorsque le contenu du canal sélectionné a ladite valeur constante et qui fournit la sortie au dispositif de comptage (8); et une seconde porte (20) qui reçoit la sortie du registre de marquage et la sortie du dispositif comparateur quand le contenu du canal sélectionné n'a pas ladite valeur constante et qui fournit la demande d'interruption.

EP 0 106 498 B1

## Fig. 1

## Fig. 2

Fig. 3

| Fig. 3A | Fig. 3B |

Fig. 3A

BUS OUT

TAG OUT

BUS IN    12

TO ANOTHER DATA BUS

15

BUS A

FROM TO CH-A

11

PRIORITY CIRCUIT

SELECT (A,B)

SET

14

COMP

CONSTANT

FROM TO CH-B

TAG IN    STATUS

AND

19

BUS B

13

20

AND

7

EP 0 106 498 B1

Fig. 3B

# Fig. 4

CH-B IS ACTUATED, PLACED IN BUSY STATE AGAIN

DEVICE IS BUSY

BUSY — NOT BUSY

STATUS IN (IOC)

END STATUS(CH-A)

STATUS IN (CH-A)

STATUS IN (CH-B)

END STATUS(CH-B)

41

42 (CH-B)

(CH-B)

43 (CH-B)

32

STATUS VIA ALTERNATE PATH

STATUS MATCH/ DESIRED VALUE

51

(PRESENT INVENTION) SPECIFIED STATUS CASE

52

TIMER ACTUATING

TIME OUT PULSE

CONSTANT TIME

INTERRUPTION REQUEST (TO CPU)

33 34 35

RQ (CPU)A

53

44

45

SAME OPERATION AS CH-A

INTERRUPTION REQUEST (FROM CPU)

36

54 ENB

55

46

STATUS STORE REQUEST (TO MSU)

37

STATUS STORE COMPLETE (FROM MSU)

56

47

INTERRUPTION COMPLETE (TO CPU)

38

57

48

49

CPU INTERRUPTION PROCESSING

39

58

ALTERNATE PATH(CH-B)I/O START REQUEST(CPU)

START REQUEST START OK

CHA START

59

50

ALTERNATE PATH(CH-B)I/O START REQUEST(CHP)

ALTERNATE PATH(CH-B)I/O START REQUEST(CH-A)

40

ALTERNATE PATH(CH-B)I/O START REQUEST(CH-B)

DEVICE BUSY (VIA CH-B)

START OK

60

DEVICE BUSY